# EUROPEAN PATENT APPLICATION

(11) **EP 3 742 239 A1**
(43) Date of publication of application: **25.11.2020**
(21) Application number: 20175037.9
(22) Date of filing: 15.05.2020
(51) Int. Cl.: G05B 15/02

(54) **SMART BUILDING SYSTEM FOR THE WIRELESS CONTROL AND COMMAND OF ELECTRIC INTERFACES/ACTUATORS**

(30) Priority: 22.05.2019 IT 201900007082
(71) Applicant: DIOT S.r.l., 20129 Milano MI (IT)
(72) Inventor: SINIGAGLIA, Ugo, 20124 Milano MI (IT)
(74) Representative: Penza, Giancarlo

(57) **Abstract**

The present invention describes a system 1 for the control and detection of an electrical installation. "Control" means the logical association through which the operation of a device is subordinated to the operation of a different device. Detection or "sensing" means the ability of the device to detect different environmental and/or biometric magnitudes of interest for the operation of the home automation system. The system comprises at least one switch 10, at least one interface-sensing-actuator device 20 and an optional control device 30. The switch device 10 can be commanded by a user, and its main purpose is to send a wireless command signal **SG_1** in response to the interaction of the user (e.g. the pressing of a button). The switch device 10 is provided with autonomous power supply, not dependent on the electrical network (e.g. battery and energy recovery systems).

The interface-sensing-actuator device 20 is connected to an electrical installation 2 and an electrical load 100. Its main purpose is to receive the signal **SG_1** coming from the switch device 10 in order to supply, interrupt or modulate the electrical power supply to the load 100. The device 20 generates a second response signal **SG_2** related to the operating status. Said signal is also used for communicating the data related to the sensing operations. The control device 30 is responsible for the creation of the wireless communication network between the devices of the system 1, for the automatic configuration of the devices 10 and 20, for their logical control association and for the monitoring of the operation of the entire system 1. The elements 10, 20 and 30 can be configured in repeater-mesh mode so as to extend the range of the system's Wi-Fi network.

## Description

The present invention relates to a home automation system for the wireless control, command and detection of interfaces/actuators (individual ones or however associated in logical and/or physical aggregations) for the supply of electric current in electrical systems wherever installed, for the power supply of electrical equipment, such as lamps, motors, fans, air conditioning, solenoid valves.

In particular, the present invention is the result of the creation of a system with a wireless control and activation method, preferably via a local Wi-Fi network (not necessarily connected to the Internet or to other devices), generated by the control device 30, with relevant electrical switches 10 that act on specific current supply points, such as electrical sockets 20. To support the aforesaid system, biometric and electrical and/or environmental sensors are present for the correct management of the home automation system. The management of the devices connected to the system according to this invention is carried out by software applications made for PCs and for mobile phone devices and integrated systems.

### PRIOR ART

To install a new electrical system, as well as to integrate or modify an existing one, a series of interventions of various kinds must be performed, including one or more of the following operations:
1 - mapping of the tracks for the passage of cables;
2 - indication on the masonry of the tracks to dig;
3 - groove (execution of traces in masonry);
4 - positioning of the junction boxes and of the electrical boxes;
5 - positioning of the tubes to protect the cables;
6 - passage of the cables;
7 - closure of the tracks and restoration of the wall surfaces;
8 - connection of the appliances;
9 - cabling of the junction boxes.

For functional reasons, for example in large rooms, it is often necessary to have multiple electrical switches, positioned in different points of one or more rooms 10 or rooms, capable of turning on or off a given electrical socket.

In such an electrical installation one or more switches act on one or more electrical sockets or light points (i.e. points where electrical power cables exit on which electrical equipment can be directly connected, such as, for example, a ceiling light).

For functional reasons, e.g. in large environments, it is often necessary to have various electrical switches, positioned in different points of one or more rooms or environments, able to switch on or off a certain electrical socket. An obvious drawback of such known electrical installation consists in the need to make multiple electrical connections between each switch and the electrical socket to be commanded and/or the light point to which an electrical user is connected.

A further drawback of such known electrical installations consists in the need to install wiring between the electrical switch and the socket with which it is associated.

Another drawback of known electrical installations consists in the rigidity of the electrical switch, socket and/or light point system, since once the design and wiring between a specific electrical socket and a switch has been performed, it is no longer possible to reconfigure the installation without rewiring.

### PURPOSE OF THE PRESENT INVENTION

The object of the present invention is to provide a flexible and easily reconfigurable system.

Another object of the present invention is to provide a system that allows a specific electrical socket to be re-associated with a switch different from the one initially designed, without having to make new tracks and wiring.

A further object of the present invention is to provide a system and method for the wireless control and command of interfaces/actuators (single or however associated in logical and/or physical aggregations) for the supply of electric current, which enables a substantial reduction of tracking and wiring operations during the construction of the electrical installation. Another object of the present invention is to provide a system and a method for the wireless control and activation of interface-sensing-actuator devices with an electrical installation that prevents the drawbacks of the prior art. A further specific object of the present invention is to create a system and method for the wireless control and command of interface-sensing-actuator devices with an electrical installation which is safe and efficient.

A further specific object of the present invention is to create a system and method for the wireless control and command of interface-sensing-actuator devices with an electrical installation that is easy to actuate and manage. With reference to currently existing home automation systems, a further object of the present invention is to guarantee the automatic configurability with minimum interaction by the user of the devices constituting the system. With reference to currently existing home automation systems, a further innovative feature of the present invention is the autonomous power supply of switching devices.

With reference to currently existing home automation systems, a further object of the present invention is to provide a system able to operate on a local Wi-Fi network generated by the same home automation system, without the need for other local networks or Internet access.

With reference to currently existing home automation systems, a further innovative feature of the present invention is the flexibility of the wireless network topology used, which can be extended in a modular way through mesh-repeater technology.

A further innovative and advantageous feature of the system is the communication topology between devices, not star but mesh, guaranteeing redundancy, scalability and modularity of the system.

### SUMMARY OF THE INVENTION

In a first aspect of the invention, the aforesaid objects are achieved by a wireless control and command system for controlling and commanding interface-sensing-actuator devices with an electrical installation according to what is described in claim 1.

Advantageous aspects are included in dependent claims 2 to 12. Furthermore, the aforesaid goals are achieved using the communication protocol described in claim 13.

Finally, the invention also provides programs for computers, mobile and integrated devices that actuate one or more of the steps of the method, as described in claim 14.

In general, the invention achieves the following technical effects:
- absence of transverse electrical connections between command switches and electrical sockets;
- absence of electrical connections between command switches and light points (e.g. ceiling lights);
- presence of switches and electrical sockets of compatible dimensions with a standard socket, e.g. of the "schuko" type;
- possibility to activate switches both manually and remotely (mobile device, PC, etc.);
- it allows the identification, localization and display of all the switches, sockets and light points present in the home automation system;
- it allows the control of the state of operation of all the switches, sockets and light points;
- it allows the display of the operating data provided by the electrical sockets and/or the light points and/or switches;
- it allows to obtain a system that can operate in a local or pre-existing wireless network, even if it is completely isolated from the Internet network;
- it allows signals to be received from external electronic devices such as photocells, timers, detectors, portable devices;
- it allows the optimized use of all the electrical devices of home installation;
- it realizes a wireless control and activation system of interface-sensing-actuator devices with a safe and efficient electric power supply system;
- it realizes a system for the wireless control and activation of interface-sensing-actuator devices with an electrical power supply system that is easy to actuate and manage;
- it allows real-time updating of the usage data of electrical sockets and/or light points and/or switches;
- it allows monitoring of the operating costs of the electrical loads connected to the sockets and/or the light points;
- it allows the use and operation of sockets and/or light points of an electrical installation to be controlled in real-time;
- it allows the creation and design by the final user of *ad hoc* use scenarios, i.e. the definition of different use sequences thereof;
- it allows a new actuator or controller to be quickly inserted into the system and to reconfigure it;
- it also allows the remote monitoring and control of the installation and the operation thereof;
- it allows the automatic configuration of the network and of the logical command associations between the switch and the interface-sensing-actuator device with minimal interaction by the user;
- it allows the modular expansion of the local wireless network through repeater-mesh topology;
- it allows the consumptions to be monitored in real-time and logged in order to evaluate the trend thereof over time;
- it allows to detect the malfunctioning of a device connected to the network;
- it allows suggestions to be provided for better eco-sustainable use of the installation, in relation to the environmental and biometric parameters detected;
- it allows the environmental and biometric parameters of the civil structure and its inhabitants to be monitored in order to guarantee suitable levels of health and comfort of the building for civil use;
- it allows, through dashboards and user interfaces, the operation of the installation and the devices connected thereto to be evaluated.

The aforementioned technical effects/advantages, and other technical effects/advantages of the invention will emerge in further detail from the description provided herein below of an example of an embodiment provided by way of approximate and non-limiting example with reference to the appended drawings.

### BRIEF DESCRIPTION OF THE DRAWINGS

To better understand the invention and to appreciate its advantages, several non-limiting example embodiments are described herein below, referring to the appended drawings, in which:
- figure 1 is a block diagram of a known installation comprising n electrical sockets and n switches;
- figure 2 is a block diagram of the system according to the present invention;
- figure 3 is a block diagram of the system of figure 1;
- figure 4 shows a functional block diagram of the switch device 10;

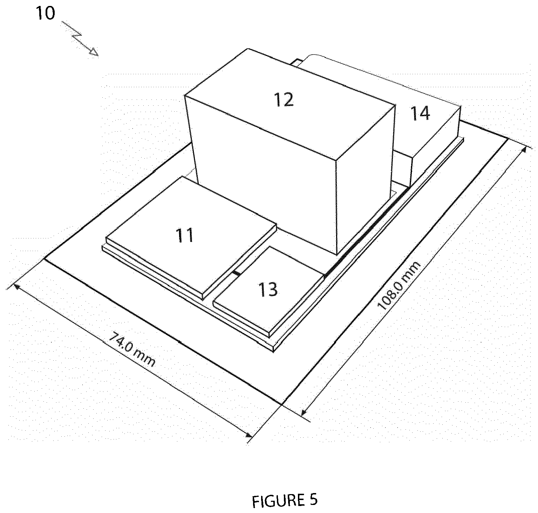

- figure 5 shows a possible embodiment of the switch device 10;
- figure 6 shows a functional block diagram of the interface-sensing-actuator device 20;

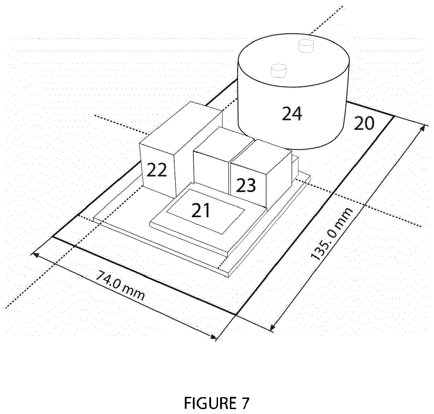

- figure 7 shows a possible embodiment of the interface-sensing-actuator device 20;
- figure 8 represents the minimum core of software functionalities implemented in the switch 10 in the form of a state machine;
- figure 9 represents the minimum core of software functionalities implemented in the interface-sensing-actuator device 20 in the form of a state machine.

### DETAILED DESCRIPTION

The following description is disclosed in different sections. After a short glossary, the system as a whole will be presented. Subsequently, the sections will address the detailed description of the three devices 10, 20 and 30 constituting the system; then, the communication protocol and the minimum algorithmic core for its implementation will be described; finally, characteristics of the system which enable the operation thereof without the need for a central controller will be analysed in depth; at the end the conclusions will be presented.

### 1- GLOSSARY AND VARIOUS DEFINITIONS

In the following description:
- An electrical installation means a system of conductor wires, cables and accessories having the function of carrying electrical current generated elsewhere (usually supplied by a third party) to a domestic or civil environment.
- A switch means a device through which an electrical circuit is opened or closed.
- Electrical current socket means a device connected to the terminals of a generator, into which a plug can be inserted to which the conductors of a user refer (double pole socket, 220 V socket, etc.).
- The electrical current is carried to the desired supply points by means of electrical cables: a phase conductor 3, a neutral conductor 4 and an earth conductor.
- Each supply point in which the current can be used, i.e. where the conductors exit from their paths into the masonry, takes the name light point. Therefore a light point is for example an electrical socket, a switch, a junction box, a ceiling light, etc.
- The network generated by device 30 will be referred to as "local network". The system 1 can also be configured to operate as a different network (provided by the user). In this document the network provided by the user will be referred to as a "pre-existing network".
- External device 40 means an electronic device through which a user can run apps, web applications, or stand-alone applications. The device is preferably of the mobile and personal type: a non-limiting example may be a smart phone, a tablet or a personal computer.

### 2 - OVERVIEW OF THE SYSTEM 1

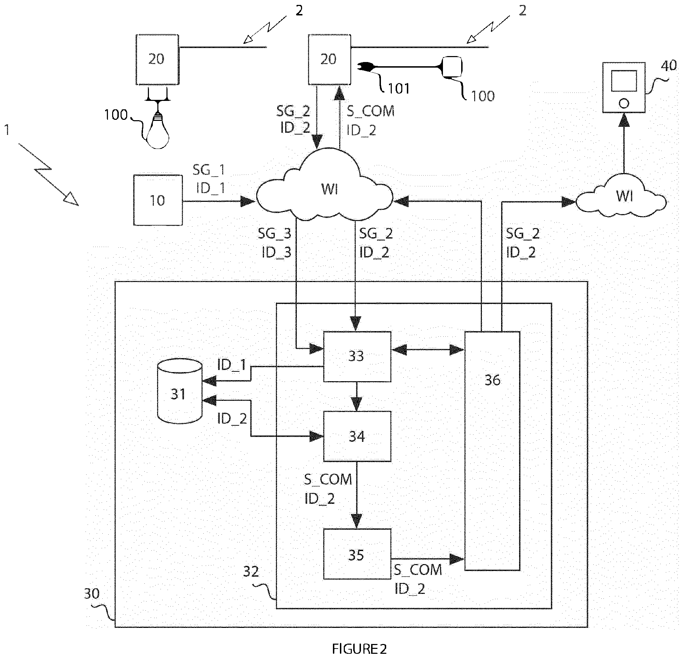

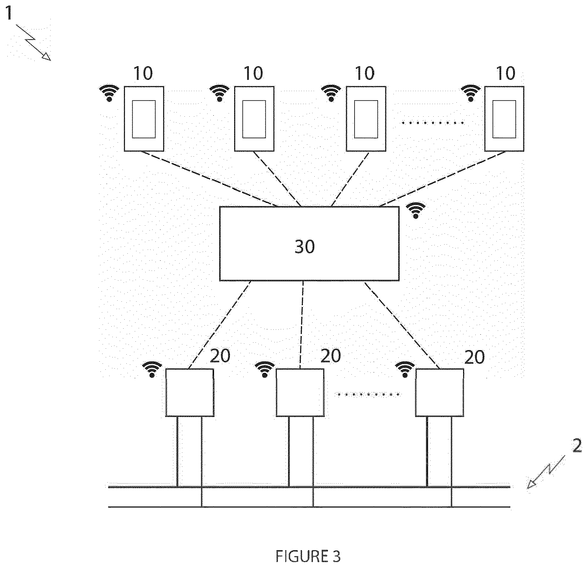

Starting from figures 2, 3, 4 and 6, an electrical installation 2 is schematically illustrated in an exemplifying way, for the power supply of loads 100 such as, for example, one or more light sources, or an electrical appliance that can be connected to the installation 2, through a traditional type plug.

The electrical power supply of the load 100 is driven by means of switching means 12, 22 adapted to open or close the connection between the electrical phase conductor 3 of the electrical installation 2 and the load 100. The switch device 10 preferably comprises switch means 12 such as, for example, switches, provided with a manual command interface such as, for example, a button.

It is also possible to have a virtual button, which can be displayed and activated through a graphical user interface by an external device.

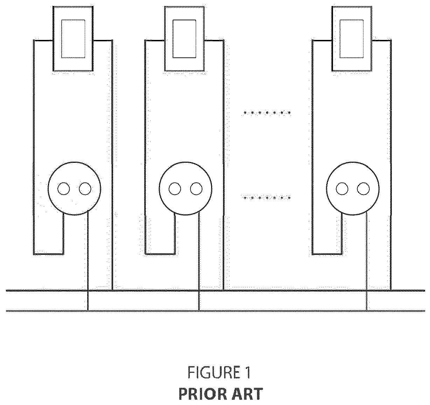

In a preferred embodiment of the invention, with reference to Figure 1, the system according to the invention comprises at least one switch device 10 that can be commanded by a user and is configured to generate and send a first wireless command signal **SG_1,** at least one electrical interface-sensing-actuator device 20 with an electrical installation 2 that can be connected to an electrical load 100.

The electrical interface-sensing-actuator device 20 is preferably configured to generate and send a second wireless signal **SG_2** related to the operating status, receive the first wireless signal **SG_1** generated by the switch device 10 and command the electrical interface-sensing-actuator device 20 so as to electrically power the electrical load 100 as a function of the first wireless signal **SG_1** received.

Preferably, the switch device 10 and the interface-sensing-actuator device 20 comprise a box-shaped body that can be integrated into the corresponding wall plates. Such configuration enables the devices 10 and 20 of the present invention to be easily integrated into common domestic wall boxes.

The devices 10 and 20 are made starting from a microcontroller equipped with firmware. In the initialisation step of these devices, the firmware is loaded onto a non-volatile (flash) memory internal to the microcontroller itself. To guarantee the possibility to update the firmware (including, for example, new functionalities) in the devices 10 and 20 already installed in-wall boxes, a remote (over-the-air) updating system is implemented on all the devices 10 and 20, 30. The system enables a specialized operator to change the firmware and/or the software present on the devices without having physical access thereto. The operation can be performed by exploiting the local Wi-Fi network or, if available, through the Internet network.

System 1 preferably comprises a control device 30 configured to identify, map, control, and activate at least one switch device 10 and at least one electrical interface-sensing-actuator device 20.

The device 30 can also operate as an access point, creating an own Wi-Fi network dedicated to the operation of the system 1.

The default operation mode is through the local network.

The elements 10, 20, and 30 are equipped with a flexible Wi-Fi interface that is able to modularly expand the range of the network (both local and pre-existing) via the mesh-repeater topology.

Such functionality allows the extension of the Wi-Fi network of the System 1 over a connection radius that allows to cover the entire extension of the domain of interest.

### 3 - SWITCHING DEVICE 10

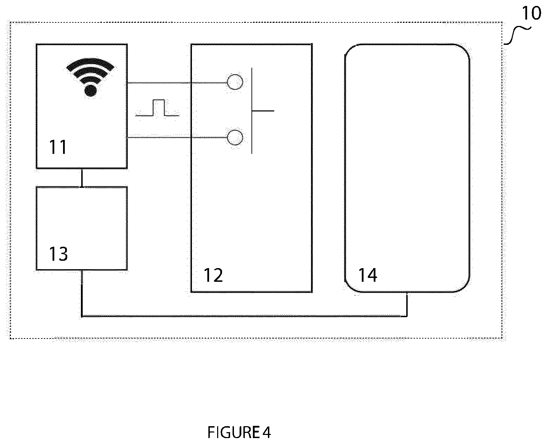

The electrical switch device 10, represented in Figure 4, according to the invention comprises a microcontroller provided with a Wi-Fi interface 11, a physical user interface 12, a voltage regulator 13 and an autonomous power supply system 14.

The physical user interface 12 may be mechanical (activated by the user by pressing a button) or virtual, allowing to act on the electrical circuit remotely. The microcontroller device 11 is electrically connected to the physical user interface 12 and generates the signal **SG_1** for switching on, off or modulating the power supply in a system 20 logically associated therewith following the command of the user.

The autonomous power supply system 14 is a battery-operated system able to allow the operation of the device without the need for a connection to the electrical network 2.

### 4 - INTERFACE-SENSING-ACTUATOR DEVICE 20

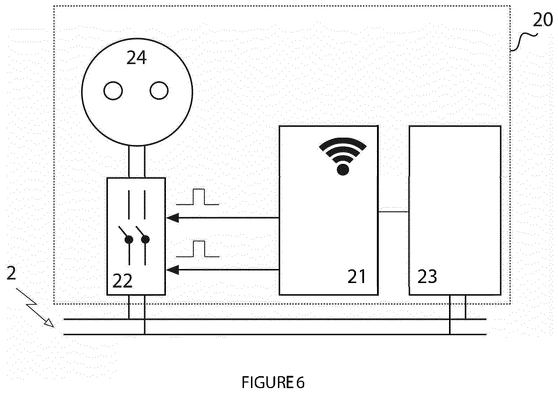

The electrical interface-sensing-actuator device 20, represented in figure 6, can be coupled to the electrical load 100 through an electrical plug 101 that can be coupled to an electrical socket 24. Alternatively, the electrical interface-sensing-actuator device 20 can be directly coupled to the electrical load 100, e.g. when the electrical load 100 is a lamp installed on the ceiling of a domestic environment.

The electrical interface-sensing-actuation device 20 is made comprises a microcontroller device 21, that acts as a sensor and control device, an electrical actuation system 22, and a power supply system 23.

The system 21 is configured to be connected to a local or pre-existing wireless network, to receive signals SG_1 and produce signals **SG_2.** The system 21 is electrically connected to the electrical actuation module 22 and to the power supply module 23.

The electrical actuation system 22 is configured to supply, interrupt or modulate the power supply 2 to the electric load 100. The electrical actuation system 22 may be, by way of non-limiting example, an electromagnetic (or solid state) relay or other actuator configured to open or close the electrical power supply circuit of the electrical load 100. The electrical actuation system 22 of the interface-sensing-actuator device 20 comprises a voltage regulator configured to automatically regulate the voltage and/or frequency and/or electrical current according to set values. The electrical actuation system 22 acts by interrupting the phase (or phase and neutral, depending to the applications) on the electrical socket 24. The power supply module 23 powers the system 20, by way of non-limiting example, directly from the network power supply through an AC-DC converter regulated to 3.3V.

The second wireless signal **SG_2** sent by the interface-sensing-actuator device 20 comprises one or more signals from among:
- a successful switching signal;
- a malfunctioning identification signal;
- a successful coupling signal between the switch device 10 and the corresponding interface-sensing-actuator device 20 as a function of the association present in the first memory unit 31;
- a signal containing the data collected by any environmental or biometric electrical sensors installed in the device 20.

Preferably, the interface-sensing-actuator device 20 comprises a sensor configured for the sensing of current absorption of electrical loads 100 connected thereto.

In this way, the consumptions of all the loads 11 connected to the electrical interfaces 20 present in the system 1 can be monitored, also in real time.

### 5 - CONTROL DEVICE 30

According to the invention, the control device 30, represented in figure 2, comprises a first memory unit 31 and a processing unit 32.

The memory unit 31 comprises at least unique identification labels **ID_1** of the switches 10 present in the system 1 and unique identification labels **ID_2** of the electrical interface-sensing-actuator device 20 present in the system 1. The processing unit 32 comprises an input module 33, an association module 34 and an activation module 35.

The input module 33 is configured to be able to receive the signals SG_1 from the switch devices 10 and the signals **SG_2** from the electrical interface-sensing-actuator devices 20.

The association module 34 is responsible for the management of the logical association between the devices 10 and 20 and therefore handles the automated procedures for the implementation thereof.

The activation module 35 is configured to generate and send a command signal S_COM as a function of the first wireless signal SG_1 received from a switch 10 to a determined electrical interface-sensing-actuator device 20 as a function of the identification label **ID_2** of the interface-sensing-actuator device 20 extracted from the association module 34.

The control device 30 provides a user interface configured to show one or more switches 10 and one or more interface-sensing-actuator devices 20 that can be activated by the user, and to manage the association and installation automation of the devices. The device 30 generates the Wi-Fi network, operating as an access point.

The automatic configuration methodology of module 34 envisages two configuration functionalities.

The first functionality allows the automatic configuration, without the intervention of a user, of the network interfaces of the devices 10 and 20 on the local or pre-existing network, as well as of the encrypted communication protocols.

The second functionality allows the automated creation of the logical association of the devices 10 and 20 following the indications provided by the user through an interface.

In the performance of the first automatic functionality, the control device 30 performs detection of the devices and the sensors 10 and 20 of the home automation system and subsequently performs the configuration of said devices for access to the local or pre-existing Wi-Fi network.

The second functionality allows the logical coupling between devices - the device 30 sends configuration signals to the switch devices 10 in order to couple the operation thereof with the interface-sensing-actuator devices 20. The first automatic functionality is performed through the following steps:
1. every switch device 10 and interface-sensing-actuator device 20 creates a free access Wi-Fi network with a specific network alphanumeric SSID of 32 characters. This SSID uniquely identifies the device that generates the wireless network. Such unique identifier is created through the regular expression **PREFIXPRG_+SERIALNUMBER_IOT,** where: **PREFIXPRG** is a prefix containing the version of the firmware and a nominal identifier of the software; **SERlALNUMBER_IOT** is a serial number obtained from **MAC ADDRESS** of the network interface of the microcontroller internal to the device. As the **MAC ADDRESSES** are unique, they dentify the device in an unambiguous way.
2. the device 30 detects the available Wi-Fi networks, recognizing the ones created by the devices 10 and 20 through the prefix **PREFIXPRG,** and creates a list of local devices and of their unique identifiers;
3. the device 30 sequentially connects to the networks created by the devices 10 and 20;
4. once connected to the Wi-Fi of each device 10, 20, the device 30 performs a reliability check on the device:
   - it sends a WHOIS command, such command being formed as follows:
      **WHOIS:SERIALNUMBER_IOT:TOKEN_SEND,** WHERE:
      ▪ **SERlALNUMBER_IOT** is the serial number of the device;
      ▪ **TOKEN_SEND** is an encoded token with an encryption algorithm present in the prior art, with the sending timestamp **TS.**
   - the interrogated device must respond with an **ACK** thus formed:
      **ACK:SERIALNUMBER_IOT:TOKEN_RECEIVE** where:
      ▪ **SERlALNUMBER_IOT** is the serial number of the device;
      ▪ **TOKEN_RECEIVE** is an encoded token with an encryption algorithm present in the prior art, containing the timestamp **TS** received, its **MAC ADDRESS,** and a **KEY_FIRMWARE.** During the initialisation step, a dataset of **KEY_FIRMWARE** will be assigned to the device 30, which is issued, during the initialisation step, in the firmware of the devices 10 and 20. The distribution of the **KEY_FIRMWARE** on the various devices 10 and 20 is performed from the point of view of minimising the risks of violation of the encryption protocol.
   - After receiving the **ACK** the device 30 decrypts and verifies:
      ▪ the **TOKEN_RECEIVE** sent by the device 10 and 20;
      ▪ that the timestamp is the same one previously sent;
      ▪ the regular expression of the **MAC ADDRESS;**
      ▪ the **KEY_FIRMWARE.**
   If all the checks are satisfied the device 30 passes on to the next step.
5. The device 30 sends a configuration signal containing the credentials for access to the local or pre-existing Wi-Fi network. Such credentials shall be encrypted with the first access timestamp **TS** and the **KEY_FIRMWARE** associated with the device. After receiving this signal, the device 10 or 20 deactivates its free access Wi-Fi network and uses the credentials obtained for connecting to the network. This operation is repeated until all the devices 10 and 20 have been configured for accessing the network;
6. the device 30 connects to the pre-existing Wi-Fi network or generates the local Wi-Fi network, and verifies the presence of all the devices 10 and 20 previously configured, sending a response request signal for a determined unique identifier WHOIS as mentioned above, sent in broadcast mode on the entire network. If the device is correctly connected to the Wi-Fi network, it receives the signal and responds by reporting its presence. Furthermore, when the device is connected to the Wi-Fi network, the response **ACK** changes, adopting the regular expression: **ACK_A:SERIALNUMBER_IOT:TOKEN_RECEIVE:TYPE_SO :N_ELE,** where:
   - **SERIALNUMBER_IOT** is the serial number of the device
   - **TOKEN_RECEIVE** is an encoded token with encryption algorithm present in the prior art, bearing the timestamp **TS** received, its **MAC ADDRESS,** and a **KEY_FIRMWARE.**
   - **TYPE_SO:** is the identification associated with the functionality / classification of the device 10 and 20;
   - **N_ELE:** represents the maximum number of user or electrical interfaces possessed by the devices of type 10 and/or 20, respectively.
   In the event of a lack of response of some devices 10 or 20 to the **WHOIS** signal, the control device 30 will repeat the operation of point 3. In the event that the operation were to fail again, the malfunctioning shall be reported through the user interface;
7. All the devices except for those reported for malfunctioning are connected to the local or pre-existing Wi-Fi network.

The second automatic functionality is composed of the following steps:
1. The memory unit 31 of the control device 30 contains the unique identifiers of the devices 10 and 20. Through the interface, the user can, at any time, memorize in the unit 31 a control association between one or more interface-sensing-actuator devices 20 to one or more switch devices 10. The storage of a new association is the starting condition for the second functionality.
2. The control device 30 verifies the new configurations or variations present in the memory unit 31. For each new configuration or variation:
   2.1. an association signal (**LINK**) is sent to the switch device 10 structured as follows: **LINK:SERIALNUMBER_IOT: TOKEN_{_}LINK** where: **SERlALNUMBER_IOT** is the serial number of the device; **TOKEN_LINK** is an encrypted token with encryption algorithm present in the prior art, with the timestamp **TS_L** of when the link request is sent, the **MAC ADDRESS** of the device 10, the **MAC ADDRESS** of the device 20, the **KEY_FIRMWARE,** the numerical identifier of the socket/button of the devices 10 and 20;
   2.2. a confirmation signal (**ACK_L**) is returned from the switch device 10 to the control device 30 as a verification for the correct association. Such command is structured as follows: **ACK_L: TOKEN_ACKL.** Where the **TOKEN_ACKL** is an encrypted token with encryption algorithm present in the prior art, with the timestamp **TS** previously received, the **MAC ADDRESS** of the device 10, the **MAC ADDRESS** of the device 20, the **KEY_FIRMWARE** and the timestamp of when the link request **TS_L** arrived and the time interval passed;
   2.3. the operations 2.1 and 2.2 are repeated in the event that associations of switch devices 10 or multiple interface-sensing-actuator devices 20 are present.
3. all the devices 10 and 20 are configured to be correctly associated. In general, it should be noted that in the context and in the subsequent claims, the processing unit 32 is considered to be split into distinct functional modules (memory modules or operating/functional modules) for the sole purpose of describing its functionalities clearly and completely.

This processing unit can consist of a single electronic device, suitably programmed to perform the described functionalities, and the different modules can correspond to hardware entities and/or software routines belonging to the programmed device.

Alternatively or additionally, these functionalities can be performed by a plurality of electronic devices on which the aforesaid functional modules can be distributed.

The processing unit 32 can also make use of one or more processors for the execution of the instructions contained in the memory modules.

Said functional modules can also be distributed over different local computers, depending on the architecture of the network in which they reside.

The control device 30 according to the invention comprises a connection unit 36 configured to handle the logical/virtual connections through a wireless network, said switch device 10 and said interface-sensing-actuator device 20.

The control modules are present in the control device 30 and can however reside on an electronic processor or on a mobile terminal that is connected to the same network as the switch devices 10 and the electrical interface-sensing-actuator devices 20.

These modules can implement one or more of the following functions:
1. Request for the identifier, the status and the association of all the devices 10 and 20 present in the system 1; this is required for providing the user with a representation, also graphical, of their home automation system.
2. Allocation of new associations between devices 10 and 20; this enables the home automation system to be easily reconfigured according to requirements.
3. Direct control of the status of interface-sensing-actuator devices 20; this enables advanced rules to be implemented based on the interaction with other sensors/home automation actuators (timing, air conditioning, etc.).
4. Monitoring of environmental and biometric magnitudes and of the power absorbed by the load 100 connected to each interface-sensing-actuator device 20.
5. Management of an automated procedure for the identification of the devices present in the system, without human intervention.

### 6 - CONTROL OF THE SYSTEM 1 THROUGH EXTERNAL DEVICE 40

The devices 10, 20 and 30 can be displayed on an external device, which detects through a proprietary software application (for mobile and/or fixed systems) the presence of electrical interface-sensing-actuator devices 20 and switches 10 in a wireless network and therefore suggests to the user the possibility to create one or more connections between them in order to be able to command the connected appliances 100. The user, with such invention, using a software application, has the possibility to manage through the user interface the connections between the electrical interface/actuator device 20 and the switches 10 present in the wireless network; such characteristic represents an innovative element that enables greater management flexibility with respect to known systems. Preferably the switches 10 of the system 1 can be displayed and activated by pressing the appropriate icons that can be seen from the user interface presentation module.

### 7 - COMMUNICATION PROTOCOL AND MINIMUM ALGORITHMIC CORE

The communication protocol described below illustrates the methods through which it is possible to control the power supply of a load connected to a device 20 as a function of a command provided by a user through the device 10. The description of the communication protocol is followed by a minimum algorithmic core, illustrated through two state machines, by way of non-limiting example, which can implement the minimum functionalities necessary for implementing the protocol. The functionalities described are obviously a low-level functional module on which more complex high level control protocols can be implemented.

The steps that implement the communication protocol are as follows:
- providing at least one switch device 10 which can be commanded by an user and an interface-sensing actuator device 20 connected to an electrical load 100;
- generating and sending a first wireless command signal **SG_1** from said switch device 10;
- receiving the signal **SG_1** by the device 20
- performing the interruption, supply, or modulation of the electrical power supply of the load 100, connected to the device 20 as a function of the signal **SG_1.**
- generating and sending from said interface-sensing-actuator device 20 a second wireless signal **SG_2,** relative to the operating status;
- receiving, by the device 10, said first wireless signal **SG_2** coming from the interface-sensing-actuator device 20;

The communication protocol used for the interaction between the switch device 10 and the electronic interface-sensing-actuator device 20 envisages, by way of non-limiting example, messaging between the two devices through which the command communication **SG_1** takes place by the switch 10 and the communication of the operating status **SG_2** by the electrical interface-sensing-actuator device 20.

For the implementation of the communication protocol described a minimum algorithmic core is proposed, in the form of two state machines, by way of non-limiting example. To support the example reported below, the User Datagram Protocol (**UDP**) was chosen.

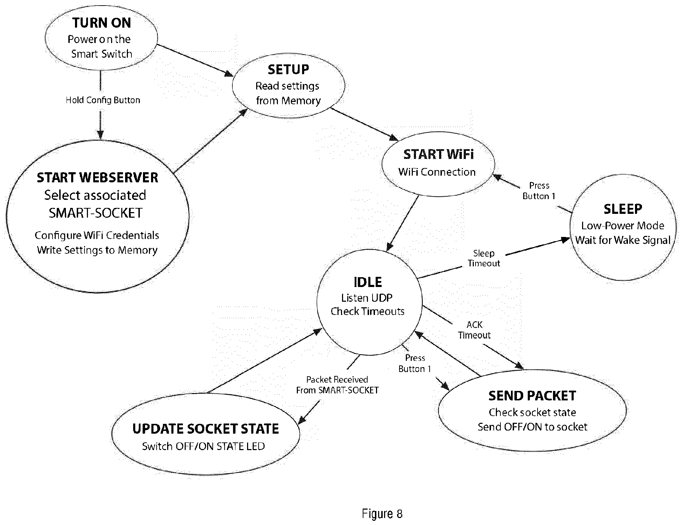

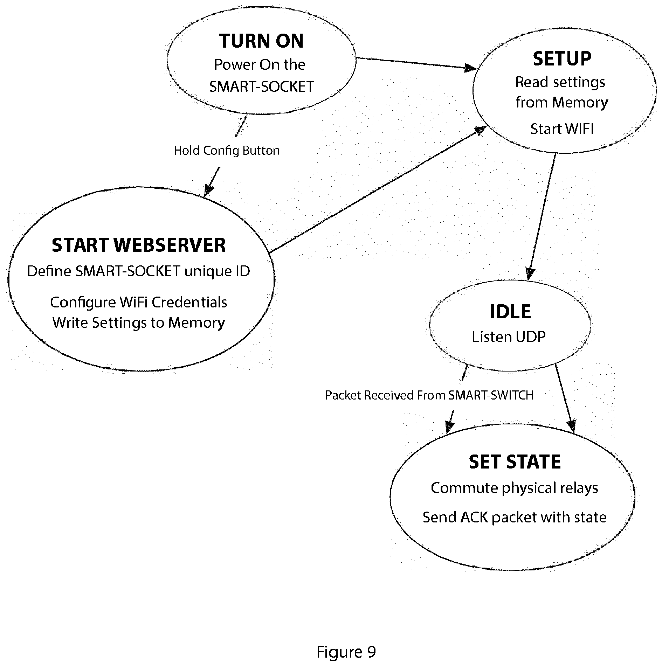

Figures 8 and 9 illustrate the state machines constituting the minimum algorithmic core able to control the power supply of the electrical load 100 connected to an interface-sensing-actuator device 20 logically associated with a switch device 10. The two state machines also have a manual system for the configuration of the access credentials to the Wi-Fi network present in the hypothesis (not preferable but contemplated) that the system 1 does not have the control system 30. To support this manual system, in the following state machines, a further button called **CONFIG BUTTON** will be considered, which is not present in the schematic representations of the devices 10 and 20 provided in this document.

Figure 8 illustrates the state machine on the switch device 10 side according to the present invention. Upon switching on the switch device 10 (**TURN ON**) it is possible, for example by acting on a physical switch or on a "virtual" switch shown in a personal electronic device, to change the status into a configuration mode through web-server **(START WEBSERVER),** in which it is possible to specify the credentials of the Wi-Fi network and the association with a specific interface-sensing-actuator device 20. The settings are saved in a non-volatile memory internal to the microcontroller 11. Subsequently, the switch device 10 performs the real start-up (**SETUP**) in which the connection to the Wi-Fi network is configured and different peripherals of the microcontroller are configured. Once the setup is completed, the device enters into its main state (**IDLE**) in which it monitors two different time-outs (**ACK** and **SLEEP**), the reception of **UDP** packets and the switching by the user of the mechanical switch. If switching of the mechanical switch takes place the device changes status (**SEND PACKET**), checks the last status recorded by the electrical interface-sensing-actuator device 20 and sends the switching command in the form of a broadcast (the message includes the identification code of the associated interface-sensing-actuator device 20). From this status, the device automatically returns to the **IDLE** status. Once the command has been sent, the switch device 10 waits to receive from the associated electrical interface-sensing-actuator device 20 an **ACK** packet containing the updated status of the interface-sensing-actuator 20 device (contained in the signal **SG_2).** If this packet is received (**UPDATE SOCKET STATE**) the switch device 10 updates the last recorded status of the **SMART-SOCKET** and returns to **IDLE.** If this packet is not received within a time-out, the command is sent again (**SEND PACKET**) and the device 10 returns to **IDLE**. In the **IDLE** status the device 10 also monitors a second time-out for entering into energy saving mode.

Such operating mode enables substantial energy savings and notably extends the life of the battery 14 present within the switch device 10.

After a certain (adjustable) period of permanence in the **IDLE** status, device 10 passes into the **SLEEP** mode status. In this way, the energy consumptions are reduced to a minimum (to further preserve the life of the battery 14).

The device remains in this status until any mechanical switching of the switch 12 (or pressing of a virtual switch represented, by way of example, on an external device 40), which wakes up the system and brings it back into the Wi-Fi connection start-up phase **(START WI-FI**).

Figure 9 illustrates the state machine on the electrical interface-sensing-actuator device side 20, according to the present invention. Upon turning on (**TURN ON**), the device 20 can be put into configuration mode **(START WEBSERVER**) like the switch device 10.

Also in this case, through a web server, it will be possible to set the credentials of the Wi-Fi network. Furthermore, it will be possible to assign a unique identification label **ID_2** to the electrical interface-sensing-actuator device 20. Once the configuration has been completed, the electrical interface-sensing-actuator device 20 proceeds to start the microcontroller peripherals and to connect to the local Wi-Fi network (**SETUP**), then passing on to the main status (**IDLE**). In this status, the device 20 monitors the Wi-Fi communications while waiting to receive a packet from the switch device 10. If this packet is received, the electrical interface-sensing-actuator device 20 performs a "parsing" on the contents thereof to verify whether it is the recipient thereof, and in the event that it is, passes on to the switching status (**SET STATE**). In this status the device 20 switches the electrical relays 22 and sends a **UDP SG_2** packet with its new status and its identification code **ID_2,** then returning to the **IDLE** status.

### 8 - OPERATION OF THE SYSTEM 1 IN THE ABSENCE OF CONTROLLER 30

As previously stated, for the correct operation of the system, the presence of the control devices 30 is not strictly necessary, but their presence enables the potentiality of the system 1 to be notably increased. The non-necessity derives from the possibility to configure the switch devices 10 through a web server integrated within it (see state machine), in which it is possible to specify the credentials of the Wi-Fi network and assign the controlled or controllable electrical interface-sensing-actuator device 20.

In a non-limiting embodiment according to the present invention, the system may be lacking of a control device 30: all the communications are in the form of broadcasts, and the various modules of the control device 30 are present locally in the microcontrollers within the devices 10 and 20.

This enables the operation of the system using the domestic router as the only support without the need either for Internet access, or static allocation of the IP address.

The system thus realized is completely modular and can be expanded both with other switch devices 10 and electrical interface-sensing-actuator devices 20 and with third-party devices.

In a non-limiting embodiment, the communications can take place in broadcast and are visible to all the devices that share the network with the switches 10 and the electrical interfaces 20. This means that it is possible to integrate this system into home management higher-systems very simply.

### 9 - CONCLUSIONS

What is described above in relation to a single switch device and/or an electrical interface-sensing-actuator device can also be understood to relate to the presence of a "plurality" of switch devices and/or a "plurality" of electrical interface-sensing-actuator devices.

As a person skilled in the art can easily understand, the invention allows to overcome the drawbacks highlighted above with reference to the prior art. In particular, the present invention enables a home automation system to be provided for the wireless control and command of actuators for the flexible and easily configurable supply of electrical current in electrical installations. It further enables:
- a determined electrical socket to be re-associated with a different switch from the one initially provided without having to perform new tracks and wiring;
- the switches and electrical interface-sensing-actuator devices to be preferably (but not exclusively) installed in common domestic wall boxes;
- various devices to be made to communicate with each other preferably through the Wi-Fi network without the need for an Internet connection.

A further advantage deriving from the simplicity of the protocol is the reduced number of communications that must take place between the devices 10 and 20 present in the system. As well as the clear band savings, streamlined communication enables the switch device 10 to frequently make use of the "sleep" mode, in which the energy consumptions of the batteries 14 are extremely reduced. The reduced consumptions enable the battery supply of the switch device 10 ensuring extremely long replacement periods.

The specific characteristics are described to different embodiments of the invention with an exemplary and non-limiting intent. Obviously, a person skilled in the art can make further modifications and variants to the present invention, in order to satisfy contingent and specific needs. For example, the technical characteristics described to an embodiment of the invention can be extrapolated therefrom and applied to other embodiments of the invention. Such modifications and variations are moreover embraced within the scope of the invention as defined by the following claims.

## Claims

1. A wireless control and command system (1) for controlling and commanding interface-sensing-actuator devices with an electrical installation comprising:
• at least one switch device (10) that can be commanded by a user configured to generate and send a first wireless command signal (SG_1);
• at least one interface-sensing-actuator device (20) with an electrical installation (2) that can be connected to an electrical load (100), said interface-sensing-actuator device (20) being configured to:
∘ generate and send a second wireless signal (SG_2) related to the operating status;
∘ receive said first wireless signal (SG_1);
∘ electrically power the electrical load (100) as a function of the first wireless signal (SG_1) received;
∘ monitor the electrical absorption of the load and other environmental/biometric magnitudes of interest for the home automation system;
• a control device (30) configured to identify, map, control and activate said switch device (10) and said interface-sensing-actuator device (20), comprising:
∘ a first memory unit (31) comprising:
▪ unique identification labels (ID_1) of the switches (10) present in the system (1);
▪ unique identification labels (ID_2) of the interface-sensing-actuator devices (20) present in the system (1);
• a processing unit (32), comprising:
▪ an input module (33) configured to receive:
- from said switch (10), said first wireless signal (SG_1);
- from said interface-sensing-actuator device (20), said second status signal (SG_2);
▪ an association module (34) configured to:
- automatically detect the presence of the devices (10) and (20) present in the local area, acquiring their identification labels (ID_1) and (ID_2) respectively;
- automatically configure said devices (10) and (20) for accessing the wireless network and, where necessary, for the expansion of the wireless network through repeater/ mesh mode;
- return the identification label (ID_2) of the interface-sensing-actuator device (20) associated with the identification label (ID_1) of the switch (10) present in the memory unit (31);
▪ an activation module (35) configured to generate and send a command (S_COM) as a function of the wireless signal (SG_1) received from a switch (10) to a determined interface-actuator device (20) as a function of the identification label (ID_2) of the interface-sensing-actuator device (20) extracted from the association module (34);
wherein said switch device (10) or said interface-sensing-actuator device (20) comprises a Wi-Fi transceiver device (11) configured to connect to an existing Wi-Fi network (WI) and to operate as a Wi-Fi repeater.

2. The wireless control and command system (1) according to claim 1, wherein said control device (30) comprises a connection unit (36) configured to associate through a wireless network (WI) said switch device (10) and said interface-sensing-actuator device (20).

3. The wireless control and command system (1) according to claim 1 or 2, wherein said wireless network (WI) is a local Wi-Fi network, which may or may not be connected to other wireless networks (WI) and/or the Internet.

4. The wireless control and command system (1) according to one or more of the preceding claims, wherein said interface-sensing-actuator device (20) can be coupled to the electrical load (100):
• directly; or
• through an electrical plug (101) that can be coupled to an electrical socket (24) of the electrical load (100).

5. The wireless control and command system (1) according to one or more of the preceding claims, wherein said interface-sensing-actuator device (20) to the electrical power supply network (2) comprises:
• a Wi-Fi transceiver device (21) configured to be connected to an existing Wi-Fi network (WI);
• a microcontroller electrically connected to said Wi-Fi transceiver (21);
• an electronic command device (22) configured to command the electrical power supply circuit (2) of the interface-sensing-actuator evice (20), in electrical communication with said microcontroller;
• an electrical connection to the electrical network (2).

6. The wireless control and command system (1) according to claim 5, wherein said electronic command device (22) of the interface-sensing-actuator device (20) comprises:
• a voltage regulator configured to automatically regulate the voltage and/or the frequency and/or the electrical current according to set values; or
• an actuator (22) used to open or close the electrical power supply circuit of the electrical load (100).

7. The wireless control and command system (1) according to one or more of the preceding claims, wherein the second wireless signal (SG_2) sent by the interface-sensing-actuator device (20) comprises one or more signals from among:
• a successful switching signal;
• a malfunctioning identification signal;
• a successful coupling signal between the switch device (10) and the corresponding interface-sensing-actuator device (20) as a function of the association present in the first memory unit (31).

8. The wireless control and command system (1) according to one or more of the preceding claims, wherein the interface-sensing-actuator device (20) comprises a sensor configured for the sensing of the absorption of the current of the electrical loads (100) connected thereto.

9. The wireless control and command system (1) according to one or more of the preceding claims, wherein said electrical switch device (10) comprises:
• a Wi-Fi transceiver device (11) configured to be connected to an existing Wi-Fi network (WI);
• a microcontroller electrically connected to said Wi-Fi transceiver (11);
• a mechanical switch (12) configured to generate an on or off or voltage regulation signal, in electrical communication with said microcontroller;
• a power supply battery (14).

10. The wireless control and command system (1) according to one or more of the preceding claims, wherein the control device (30) comprises a user interface-sensing-actuator connected to the said processing unit (32) comprising:
• a presentation module configured to show at least one said switch (10) and at least one said interface-sensing-actuator device (20) that can be activated by the user;
• an association module configured to couple one or more interface-sensing-actuator devices (20) with one or more switches (10).

11. The wireless control and command system (1) according to one or more of the preceding claims, wherein the switch device (10) and the interface-sensing-actuator device (20) comprise a box-shaped body that can be integrated into the corresponding wall plates.

12. The wireless control and command system (1) according to one or more of the preceding claims, wherein the switch device (10) and/or the control device (30) can be viewed on an external device (40).

13. A wireless control and command method for controlling and commanding interface-sensing-actuator devices with an electrical installation comprising the steps of:
• providing at least one switch device (10) that can be commanded by a user;
• generating and sending a first wireless command signal (SG_1) from said switch device (10);
• electrically connecting at least one interface-sensing-actuator device (20) with an electrical installation (2), said interface-sensing-actuator device (20) being in turn connectable to an electrical load (100);
• generating and sending a second wireless signal (SG_2) related to the operating status from said interface-sensing-actuator device (20);
• receiving said first wireless signal (SG_1) from said interface-sensing-actuator device (20);
• commanding the interface-sensing-actuator device (20) so as to electrically power the electrical load (100) as a function of the first wireless signal (SG_1) received;
• providing a control device (30) configured to identify, map, control and activate said switch device (10) and said interface-sensing-actuator device (20);
• providing a first memory unit (31) comprising:
∘ unique identification labels (ID_1) of the switches (10) present in the system (1);
∘ or unique identification labels (ID_2) of the interface-sensing-actuator devices (20) present in the system (1);
• receiving from said switch (10), said first wireless signal (SG_1);
• receiving from said interface-sensing-actuator device (20), said second status signal (SG_2);
• returning the identification label (ID_2) of the interface-sensing-actuator device (20) associated with the identification label (ID_1) of the switch (10) present in the memory unit (31);
• generating and sending a command (S_COM) as a function of the wireless signal (SG_1) received from a switch (10) to a determined interface-sensing-actuator device (20) as a function of the identification label (ID_2) of the interface-sensing-actuator device (20) extracted from the association module (34);
wherein said switch device (10) or said interface-sensing-actuator device (20) comprises a Wi-Fi transceiver device (11) configured to connect to an existing Wi-Fi network (WI) and to operate as a Wi-Fi repeater.

14. The method according to claim 13, wherein one or more steps are performed through an electronic processor or a portable device.
